(19) Europäisches Patentamt
European Patent Office
Office européen des brevets

(11) **EP 4 668 994 A1**

(12) **EUROPEAN PATENT APPLICATION**
published in accordance with Art. 153(4) EPC

(43) Date of publication:
**24.12.2025 Bulletin 2025/52**

(21) Application number: **23922604.6**

(22) Date of filing: **13.02.2023**

(51) International Patent Classification (IPC):
**H04W 72/51** (2023.01)   **H04W 24/10** (2009.01)
**H04W 84/06** (2009.01)

(52) Cooperative Patent Classification (CPC):
**H04W 24/10; H04W 72/51; H04W 84/06**

(86) International application number:
**PCT/JP2023/004827**

(87) International publication number:
**WO 2024/171264 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **YOSHIOKA Shohei**
**Tokyo 100-6150 (JP)**
• **HARADA Hiroki**
**Tokyo 100-6150 (JP)**
• **NAGATA Satoshi**
**Tokyo 100-6150 (JP)**
• **WANG Jing**
**Beijing 100190 (CN)**
• **YOU Luhua**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL**

(57)   A terminal includes: a control unit that acquires a parameter related to at least one of a relay station that relays a radio communication between the terminal and a base station, the terminal, and the base station, the parameter related to position or movement; and a transmission unit that reports a duration corresponding to the parameter during which an update of a transmission timing of the terminal in an uplink to cause phase discontinuity is not performed.

## FIG. 8

**Description**

TECHNICAL FIELD

The present disclosure relates to a terminal that communicates with a base station via a relay station.

BACKGROUND ART

The 3rd Generation Partnership Project (3GPP: Registered Trademark) has prepared a specification for the 5th generation mobile communication system (which may be called 5G, New Radio (NR), or Next Generation (NG)), and is also in the process of specifying the next generation called Beyond 5G, 5G Evolution, or 6G.
In 3GPP, coverage improvement of non-terrestrial network (Non-Terrestrial Network, NTN) has been discussed. An NTN is a network including a relay station such as a satellite, and a terminal (User Equipment, UE) can communicate with a base station (next Generation NodeB, gNB) via a relay station.
Timing advance (TA) is configured to compensate for a propagation delay between the UE and the gNB. In the NTN, a propagation distance changes especially as the relay station moves, so that it is necessary to update the TA periodically. By updating the TA, the UE can maintain frequency/time synchronization with the gNB (Non-Patent Literature 1).
Further, in the NTN, a repetitive transmission of channels in the uplink (Uplink, UL) is specified (Non-Patent Literature 2). The channels in the UL are physical channels such as a physical uplink shared channel (Physical Uplink Shared Channel, PUSCH) and a physical uplink control channel (Physical Uplink Control Channel, PUCCH).
In the repetitive transmission of channels, demodulation reference signal (DMRS) bundling is applied such that the gNB performs accurate channel estimation. DMRS bundling is a technique for performing channel estimation based on DMRS of multiple channels in the repetitive transmission. In the transmission of multiple DMRSs used in the DMRS bundling, it is necessary to maintain power consistency and phase continuity. Therefore, the UE may maintain a TA value (it is not necessary to update the TA value) in the maintained duration which maintains the power consistency and phase continuity.

CITATION LIST

NON-PATENT LITERATURE

Non-Patent Literature 1: 3GPP TS 38.213 V17.3.0, 3rd Generation Partnership Project; Technical Specification Group Radio Access Network; NR; Physical layer procedures for control (Release 17), 3GPP, September 2022
Non-Patent Literature 2: 3GPP TS 38.214 V17.3.0, 3rd Generation Partnership Project; Technical Specification Group Radio Access Network; NR; Physical layer procedures for control (Release 17), 3GPP, September 2022

SUMMARY OF INVENTION

The UE reports the maintained duration described above to the gNB. The maintained duration to be reported is determined based on the amount of change in the propagation distance from the UE/gNB to the relay station. This is because if the amount of change is small, the update frequency of the TA is assumed to be low, so that it is preferable to configure the long maintained duration. Meanwhile, if the amount of change is large, the update frequency of the TA is assumed to be high, so that it is preferable to configure the short maintained duration.
However, since the amount of change in the propagation distance changes in various ways depending on the position or movement of the relay station/UE/gNB constituting the NTN, there is a problem that it is difficult to report an appropriate maintained duration.
Therefore, the present disclosure has been made in view of such a situation, and aims to provide a terminal capable of reporting an appropriate maintained duration according to the amount of change in a propagation distance changing in various ways depending on a position or movement of a relay station/terminal/base station constituting an NTN.
An aspect of the present disclosure is a terminal including: a control unit (control unit 270) that acquires a parameter related to at least one of a relay station that relays a radio communication between the terminal and a base station, the terminal, and the base station, the parameter related to position or movement; and a transmission unit (radio signal transmission and reception unit 210) that reports a duration corresponding to the parameter during which an update of a transmission timing of the terminal in an uplink to cause phase discontinuity is not performed.

BRIEF DESCRIPTION OF DRAWINGS

[FIG. 1] FIG. 1 is an overall schematic diagram of a radio communication system.

[FIG. 2] FIG. 2 is a diagram illustrating frequency ranges used in the radio communication system.

[FIG. 3] FIG. 3 is a diagram illustrating a configuration example of radio frames, sub-frames, slots, and symbols used in the radio communication system.

[FIG. 4] FIG. 4 is a diagram illustrating an example of DMRS bundling.

[FIG. 5] FIG. 5 is a functional block diagram of a terminal.

[FIG. 6] FIG. 6 is a functional block diagram of a base station.

[FIG. 7] FIG. 7 is a diagram illustrating an example of an altitude of relay stations.

[FIG. 8] FIG. 8 is a diagram illustrating a sequence in which the terminal reports a maintained duration based on parameters acquired from the base station.

[FIG. 9] FIG. 9 is a diagram illustrating an example of a hardware configuration of the base station and the terminal.

[FIG. 10] FIG. 10 is a diagram illustrating a configuration example of a vehicle.

DESCRIPTION OF EMBODIMENT

An embodiment will be described below with reference to the drawings. Note that the same or similar reference numerals have been attached to the same functions and configurations, and a description thereof will be omitted as appropriate.

(1) Configuration of radio communication system

(1.1) Schematic configuration

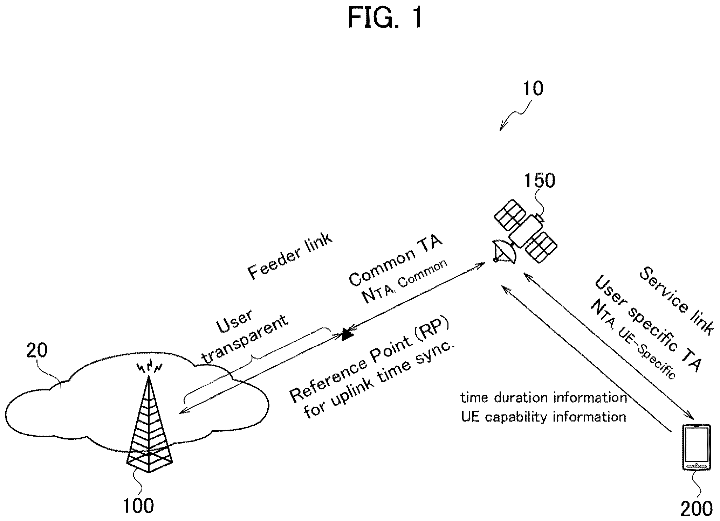

The radio communication system 10 illustrated in FIG. 1 is a radio communication system according to a scheme called 5G New Radio (NR). In addition, the radio communication system 10 may be a radio communication system according to a scheme called Beyond 5G, 5G Evolution, or 6G.

The radio communication system 10 can support Massive Multiple-Input Multiple-Output (Massive MIMO) that generates a beam with higher directivity by controlling radio signals transmitted from multiple antenna elements, carrier aggregation (CA) that uses multiple component carriers (CCs) bundled together, dual connectivity (DC) that performs communication with two base stations simultaneously, and the like.

As illustrated in FIG. 1, the radio communication system 10 includes a Next Generation-Radio Access Network (NG-RAN) 20, a base station (next Generation NodeB, gNB) 100 connected to the NG-RAN 20, and a terminal (User Equipment, UE) 200 that performs a radio communication with the gNB 100. The NG-RAN 20 is connected to a core network (CN) which is not illustrated. The NG-RAN 20 and the CN may be simply described as a "network". The gNB 100 may be interpreted to be included in the network. Here, the specific configuration of the radio communication system 10, for example, the number of the gNBs 100 and the UEs 200, is not limited to the example illustrated in FIG. 1.

The radio communication system 10 of the embodiment includes a relay station 150 that relays a radio communication between the UE 200 and the gNB 100. The relay station 150 is a satellite such as a GEO (Geostationary Earth Orbit) satellite, a MEO (Middle Earth Orbit) satellite, or a LEO (Low Earth Orbit) satellite. In addition, the relay station 150 may be a high altitude platform station (High Altitude Platform Station, HAPS) mounted on an airship or a balloon, or may be a commercial aircraft (Air to Ground, ATG). The relay station 150 of the embodiment assumes a flying body as described above; however, it is not limited thereto.

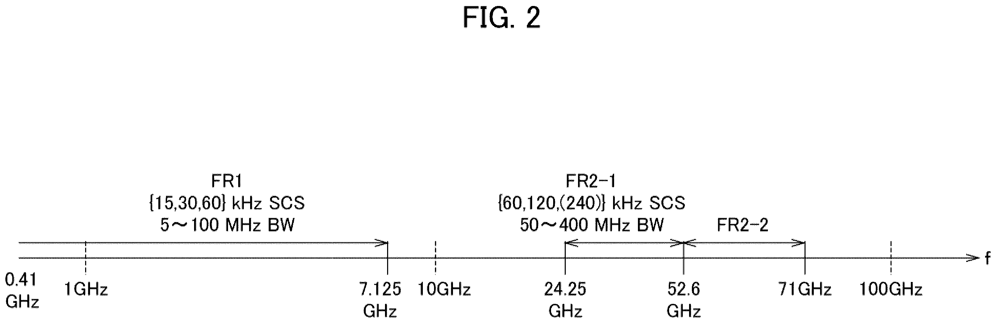

Further, the radio communication system 10 may support multiple frequency ranges (FRs). That is, as illustrated in FIG. 2, the radio communication system 10 may support the following FRs.

- FR1: 410 MHz to 7.125 GHz
- FR2-1: 24.25 GHz to 52.6 GHz
- FR2-2: Over 52.6 GHz to 71 GHz

In FR1, sub-carrier spacing (SCS) of 15, 30, or 60 kHz and a bandwidth (BW) of 5 to 100 MHz may be used. In FR2-1, SCS of 60 or 120 kHz (240 kHz may be included) and a BW of 50 to 400 MHz may be used.

In FR2-2, cyclic prefix-orthogonal frequency division multiplexing (CP-OFDM) or discrete Fourier transform-spread-orthogonal frequency division multiplexing (DFT-S-OFDM) having larger SCS may be applied in order to avoid an increase in phase noise.

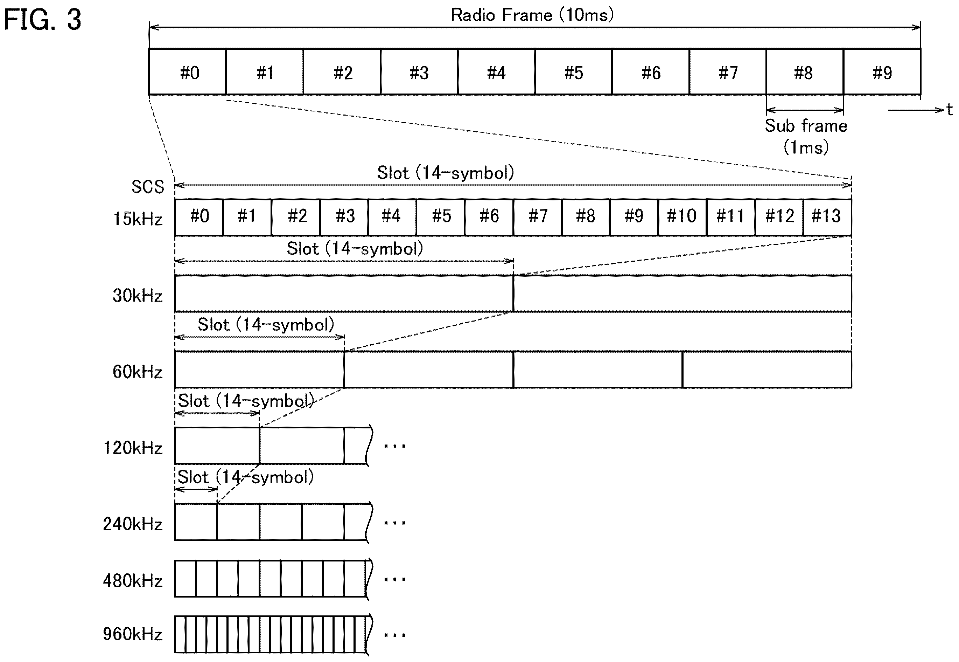

Further, as illustrated in FIG. 3, one slot in the radio communication system 10 is constituted of 14 symbols. When this configuration is maintained, the symbol duration (and slot duration) becomes shorter as the SCS becomes larger (wider). Here, the SCS is not limited to the frequencies illustrated in FIG. 3, and may be a frequency such as 480 kHz or 960 kHz.

In addition, the number of symbols constituting one slot may not necessarily be 14 symbols, and may be 28 or 56 symbols, for example. Further, the number of slots for each subframe may vary depending on the SCS.

(1.2) Timing Advance

Returning to FIG. 1, TA applied to the radio communication system 10 of the embodiment will be described. The TA is a mechanism for controlling (advancing) the transmission timing of the UE 200 in the UL according to the distance from the gNB 100 (or from the reference point (RP) related to synchronization with the downlink (DL) and the uplink (UL) in the figure). Therefore, it can be said that the TA is a transmission timing (to be controlled).

In the radio communication system 10 of the embodiment, it is necessary to update the TA according to a change in the propagation path caused by the movement of the relay station 150/UE 200/gNB 100. In the following description, the propagation distance considered in the calculation of the TA will be described. Since the propagation distance not considered in the calculation of the TA (corresponding to user transparent in the figure) is assumed to be solved in the gNB 100, a description thereof will be omitted.

The TA related to the UE 200 is calculated by the following equations, for example, as specified in 3GPP TS 38.211 V17.3.0.

$$T_{TA} = (N_{TA} + N_{TA,UE\text{-}specific} + N_{TA,common} + N_{TA,offset}) \times T_C$$

$T_{TA}$: Timing advance between downlink and uplink
$N_{TA}$: Timing advance between downlink and uplink
$N_{TA,UE\text{-}specific}$: UE-derived timing correction
$N_{TA,common}$: Network-controlled timing correction
$N_{TA,offset}$: A fixed offset used to calculate the timing advance
$T_C$: Basic time unit for NR

$N_{TA}$ is a closed-loop TA. The $N_{TA}$ is defined as 0 in the physical random access channel (Physical Random Access Channel, PRACH). The $N_{TA}$ is updated based on the TA command field of msg2/msgB and on the TA command of the control element of the media access control layer (MAC CE).

$N_{TA,UE\text{-}specific}$ is an open-loop TA. The $N_{TA,UE\text{-}specific}$ is a TA which is self-evaluated by the UE 200 in order to compensate for delays in the service link. The $N_{TA,UE\text{-}specific}$ is calculated based on the position information of the UE 200 and on the trajectory information of the relay station 150. Here, the position information of the UE 200 may be acquired based on, for example, a radio signal from a satellite positioning system (not illustrated).

$N_{TA,common}$ is an open-loop TA. The $N_{TA,common}$ is a common TA controlled by the gNB 100 (network). The $N_{TA,common}$ is determined in the UE 200 based on a parameter for determining the common TA notified by the gNB 100.

Here, the reference point (RP) defining the $N_{TA,common}$ may be configured anywhere on the feeder link. That is, the RP may be configured at the gNB 100 or the relay station 150, or as illustrated in FIG. 1, may be configured between the gNB 100 and the relay station 150. When the RP is configured at the gNB 100, there is an advantage that the burden on the gNB 100 is reduced. When the RP is configured at the relay station 150, the $N_{TA,common}$ becomes 0, and there is an advantage that the burden on the UE 200 is reduced.

In the following description, the open-loop TA is referred to as a TA pre-compensation in some cases.

(1.3) DMRS bundling

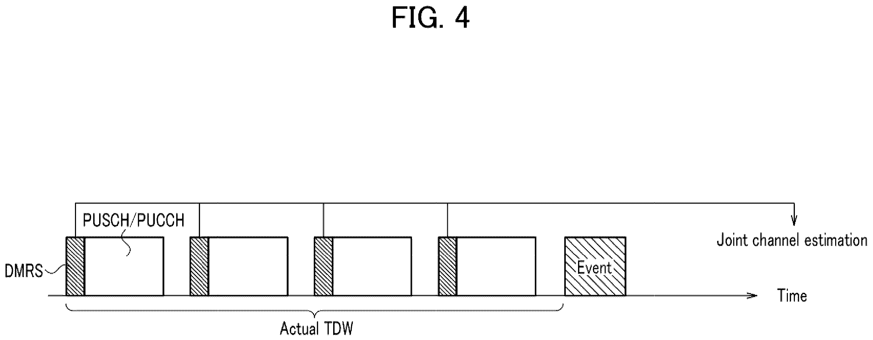

The DMRS bundling applied to the radio communication system 10 of the embodiment will be described with reference to FIG. 4.

From the viewpoint of the UE 200, the DMRS bundling is a technique for transmitting a DMRS while maintaining power consistency and phase continuity in multiple channels repeatedly transmitted, whereas the DMRS was conventionally transmitted while maintaining power consistency and phase continuity in each channel repeatedly transmitted.

From the viewpoint of the gNB 100, the DMRS bundling is a technique for performing a channel estimation based on a DMRS in multiple channels repeatedly transmitted, whereas a channel estimation was conventionally performed based on a DMRS in each channel repeatedly transmitted. From this viewpoint, the DMRS bundling may be called a joint channel estimation. The accuracy of channel estimation can be improved by the DMRS bundling.

The UE 200 and the gNB 100 need to have a common understanding of the time section in which the power consistency and phase continuity related to channel transmission are maintained regarding the DMRS bundling described above. Therefore, as illustrated in FIG. 4, the UE 200 configures an actual TDW as a duration in which the power consistency and phase continuity are maintained, and transmits channels repeatedly in the actual TDW while maintaining the power consistency and phase continuity.

Here, the actual TDW is determined as a duration included in the nominal TDW configured in advance. Accordingly, it can be said that the nominal TDW is the maximum value of the duration for maintaining the power consistency and phase continuity described above. Therefore, the UE 200 may configure the nominal TDW as the duration for maintaining the power consistency and phase continuity.

The actual/nominal TDW is determined or configured so as to avoid events. This is because the occurrence of events makes it difficult to maintain the power consistency and phase continuity. The event is, for example, an update of the TA described above. Therefore, it can be said that the actual/nominal TDW is a maintained duration for maintaining the power consistency and phase continuity, or a maintained duration for maintaining the TA (not updating the TA), or a cancellation duration for canceling events such as an update of the TA, or an applicable duration which can apply only an update of the TA that satisfies the predetermined condition regarding the phase continuity.

The duration for maintaining the power consistency and phase continuity is not limited to the actual/nominal TDW, and may be referred to as a maintained duration, a cancellation duration, an applicable duration, an actual/nominal TDW size, a bundling size, an interval, a time duration, a time duration for DMRS bundling, or a time duration to avoid updating TA (TA pre-compensation) which causes phase discontinuity which may violate the required performance of the UE. In addition, these durations may be read as the maximum values of the durations.

(2) Functional block configuration of radio communication system

(2.1) Functional block configuration of terminal

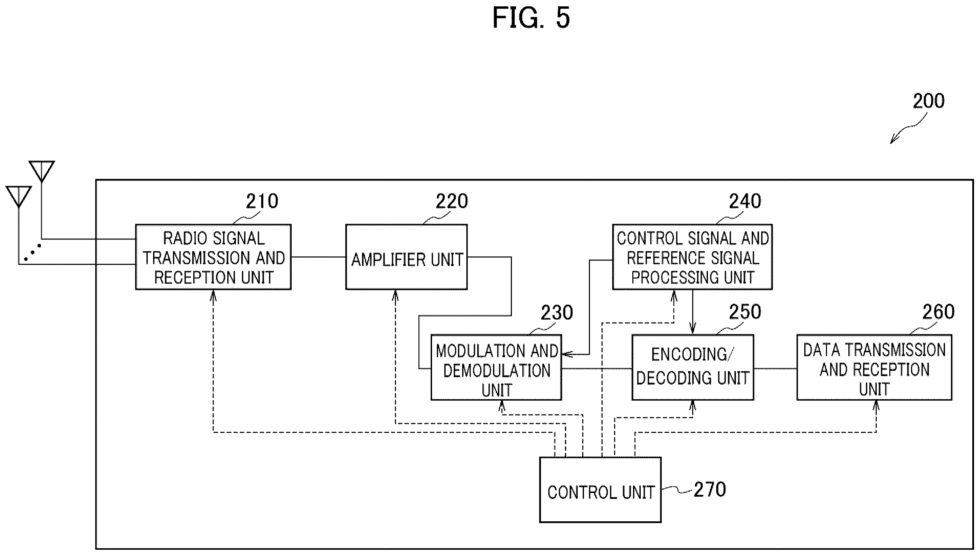

As illustrated in FIG. 5, the UE 200 includes a radio signal transmission and reception unit 210, an amplifier unit 220, a modulation and demodulation unit 230, a control signal and reference signal processing unit 240, an encoding/-decoding unit 250, a data transmission and reception unit 260, and a control unit 270.

The radio signal transmission and reception unit 210 transmits and receives radio signals to and from the gNB 100. The radio signal transmission and reception unit 210 may include a transmission unit that transmits radio signals to the gNB 100, and a reception unit that receives radio signals from the gNB 100. The radio signals include the control signals and reference signals/data.

The radio signal transmission and reception unit 210 of the embodiment reports the maintained duration for maintaining the power consistency and phase continuity. Specifically, the radio signal transmission and reception unit 210 reports one or more maintained durations corresponding to parameters (a single value or multiple values described later) related to the position or movement of the relay station 150/UE 200/gNB 100 acquired by the control unit 270. In addition, the radio signal transmission and reception unit 210 may report one duration set of multiple duration sets configured by the control unit 270, each consisting of the multiple maintained durations. Here, the maintained duration may be interpreted as a duration during which an update of the transmission timing of the UE 200 in the UL is not performed, that is, an update of the TA is not performed, as described above.

The amplifier 220 includes a power amplifier (PA), a low noise amplifier (LNA), and the like. The amplifier 220 amplifies radio signals output from the radio signal transmission and reception unit 210. The amplifier 220 also amplifies radio signals output from the modulation and demodulation unit 230.

The modulation and demodulation unit 230 performs data modulation and demodulation, a transmission power configuration, a resource block allocation, and the like for each predetermined communication destination (gNB 100 or another gNB). CP-OFDM/DFT-S-OFDM may be applied in the modulation and demodulation unit 230. In addition, the DFT-S-OFDM may be used not only for an uplink (UL), but also for a downlink (DL).

The control signal and reference signal processing unit 240 performs processing related to control signals transmitted and received to and from the gNB 100, such as radio resource control (RRC) signaling.

The control signal and reference signal processing unit 240 performs processing related to reference signals transmitted and received to and from the UE 200, such as Demodulation Reference Signal (DMRS), Phase Tracking Reference Signal (PTRS), Channel State Information-Reference Signal (CSI-RS), Sounding Reference Signal (SRS), and Positioning Reference Signal (PRS).

The channels include control channels and data channels. The control channels include a physical uplink control channel (PUCCH), a physical downlink control channel (PDCCH), a physical random access channel (PRACH), a physical broadcast channel (PBCH), and the like. The data channels include a physical uplink shared channel (PUSCH), a physical downlink shared channel (PDSCH), and the like.

The encoding/decoding unit 250 performs data division/concatenation, channel coding/decoding, and the like included in the radio signal for each predetermined communication destination (gNB 100 or another gNB).

Specifically, the encoding/decoding unit 250 decodes the data output from the modulation and demodulation unit 230, and concatenates the decoded data. Further, the encoding/decoding unit 250 divides the data output from the data transmission and reception unit 260 into predetermined sizes, and performs channel coding on the divided data.

The data transmission and reception unit 260 transmits and receives data to and from the gNB 100. Specifically, the data transmission and reception unit 260 performs assembly/disassembly of Protocol Data Unit (PDU)/Service Data Unit (SDU) among multiple layers. The multiple layers include a medium access control (MAC) layer, a radio link control (RLC) layer, a packet data convergence protocol (PDCP) layer, and the like. In addition, the data transmission and reception unit 260 performs error correction and retransmission control of data based on HARQ (Hybrid Automatic Repeat Request).

The control unit 270 controls the UE 200. The control unit 270 controls, for example, transmission and reception of radio signals performed by the radio signal transmission and reception unit 210, amplification performed by the amplifier unit 220, data modulation/demodulation performed by the modulation and demodulation unit 230, signal processing performed by the control signal and reference signal processing unit 240, coding/decoding performed by the encoding/-decoding unit 250, and data transmission and reception performed by the data transmission/reception unit 260.

The control unit 270 of the embodiment acquires one or more parameters related to the position or movement of the relay station 150/UE 200/gNB 100 from, for example, the gNB 100. Further, the control unit 270 may acquire a single value or multiple values as these parameters. The parameter related to the position or movement of the relay station 150/UE 200/gNB 100 will be described in detail in the description of the operation examples. For example, the parameter is the altitude of the relay station 150/UE 200/gNB 100.

The control unit 270 determines a maintained duration corresponding to the parameter related to the position or movement of the relay station 150/UE 200/gNB 100, and causes the radio signal transmission and reception unit 210 to report the maintained duration. Further, the control unit 270 may configure multiple duration sets, each consisting of multiple maintained durations, and causes the radio signal transmission and reception unit 210 to report one duration set.

(2.2) Functional block configuration of base station

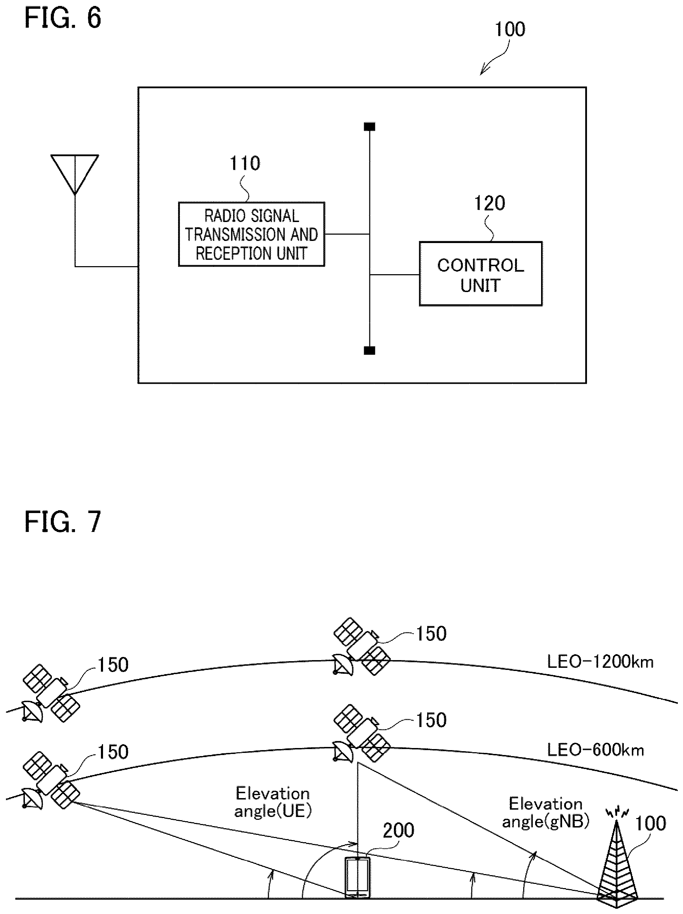

As illustrated in FIG. 6, the gNB 100 includes a radio signal transmission and reception unit 110, and a control unit 120.

The radio signal transmission and reception unit 110 transmits and receives radio signals to and from the UE 200. The radio signal transmission and reception unit 110 may include a transmission unit that transmits radio signals to the UE 200, and a reception unit that receives radio signals from the UE 200.

The control unit 120 controls the gNB 100. The control unit 120 controls, for example, transmission and reception of radio signals performed by the radio signal transmission and reception unit 110.

(3) Operation of radio communication system

(3.1) Problem

The UE 200 reports the maintained duration described above to the gNB 100. The maintained duration to be reported is determined based on the amount of change in the propagation distance from the UE 200/gNB 100 to the relay station 150. This is because if the amount of change is small, the update frequency of the TA is assumed to be low, so that it is preferable to configure the long maintained duration. Meanwhile, if the amount of change is large, the update frequency of the TA is assumed to be high, so that it is preferable to configure the short maintained duration.

However, since the amount of change in the propagation distance changes in various ways depending on the position or movement of the relay station 150/UE 200/gNB 100 constituting the NTN, there is a problem that it is difficult to report an appropriate maintained duration.

(3.2) Operation examples

The UE 200 reports to the gNB 100, a maximum value of time duration (hereinafter, it is also referred to as T_max) corresponding to at least one parameter related to the relay station 150/UE 200/gNB 100 and related to the position or movement thereof.

"T_max corresponding to a parameter" may be interpreted as meaning that "T_max is determined based on a parameter". Specifically, it may be interpreted as meaning that the T_max is calculated based on the parameter, or it may be interpreted as meaning that the T_max, which is listed in the table or the like acquired in advance from the gNB 100, is selected based on the parameter. Further, it may be interpreted as meaning that these are combined. For example, it may be interpreted as meaning that the T_max which is closest to the calculated value is selected from among the T_max listed in the table.

At the maximum value of the time duration, the UE 200 does not perform an update of the TA (TA pre-compensation) which causes phase discontinuity which may violate the required performance of the UE. That is, the TA value may be maintained, and only an update of the TA, which does not cause phase discontinuity which may violate the required performance of the UE, may be applied. The maximum value of the time duration is determined by the UE 200 based on the parameter as described above.

Note that "maximum value of time duration which does not perform an update of TA which causes phase discontinuity" may be read as "maximum duration in which it is possible to continue UL transmission from a specific timing without performing such an update of TA", for example. Here, "specific timing" may be, for example, "start timing of channel repetitive transmission (e.g., PUSCH repetition)", or "update timing of the most recent TA" .

The maximum value of time duration may be read as time duration. Further, "phase discontinuity that may violate the required performance of the UE" may mean that the phase continuity cannot be maintained, or may mean that a phase change exceeding a specific value occurs in phase continuity or phase discontinuity (not exceeding a specific value).

In the following description, the parameter related to the position or movement of the relay station 150 will be described as an example. However, the parameter related to the position or movement of the relay station 150 in the following description may be read as the parameter related to the position or movement of the UE 200/gNB 100.

The parameter related to the position or movement of the relay station 150 is, for example, altitude, moving speed, type of satellite (for example, GEO, MEO, LEO, HAPS, ATG), and orbit information.

The parameter related to the position or movement of the UE 200/gNB 100 is, for example, altitude, and moving speed. In addition, the gNB 100 may be read as a gateway (GW) .

(3.2.1) Operation example 1

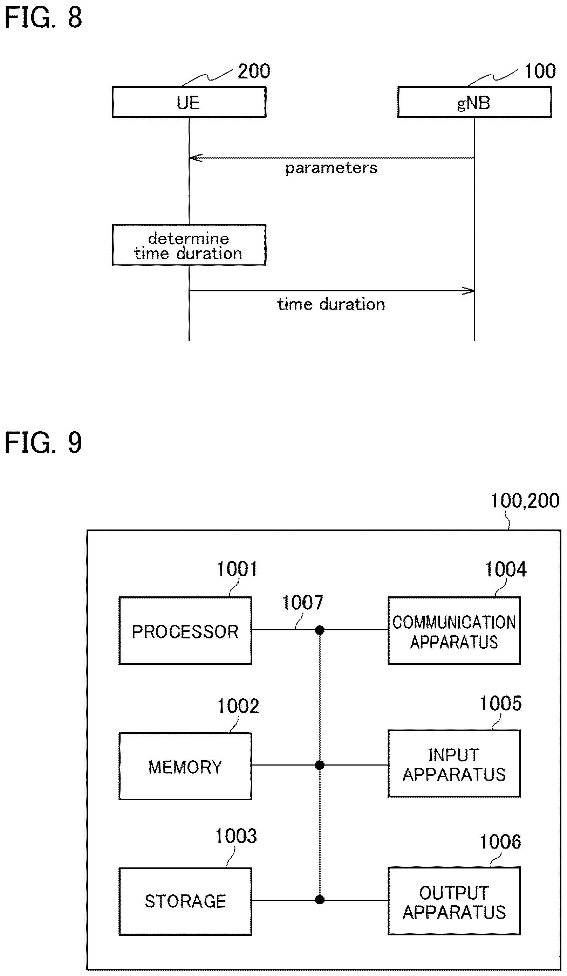

As illustrated in FIGS. 7 and 8, the UE 200 acquires a parameter related to the position or movement of the relay station 150 from, for example, the gNB 100, determines T_max, which is a maximum value of time duration corresponding to the parameter, and reports the T_max to the gNB 100 via the relay station 150. In the following description, the parameter is assumed to be the altitude of the relay station 150.

Option 1 (single value): Report one T_max corresponding to one parameter.

Example 1: One parameter (for example, at an altitude of 1200 km) described above is defined in the specification.

Example 2: One parameter described above (for example, at an altitude of 1200 km) is configured via an SIB such as an NTN-specific SIB. Here, the NTN-specific SIB may be an SIB via which a parameter for NTN is transmitted, or may be an SIB 19. The same shall be applied hereinafter.

Example 3: One parameter described above is the altitude (for example, at an altitude of 600 km) of the relay station 150 providing the serving cell of UE 200.

Effect: The processing load can be reduced by a simple mechanism.

Option 2 (multiple values): Report multiple T_max corresponding to multiple parameters (values or value ranges) .

Option 2-1: Report T_max corresponding to each of multiple parameters (for example, at an altitude of 600 km, 1200 km, 2000 km).

Option 2-2: Report T_max corresponding to each of multiple parameter ranges (for example, at an altitude of of 600 km or more and less than 1200 km, and at an altitude of 1200 km or more and 2000 km or less).

Example 1: Multiple parameters or multiple parameter ranges described above are defined in the specification.

Example 2: Multiple parameters or parameter ranges described above are configured via an SIB such as an NTN-specific SIB.

Example 3: Multiple parameters described above are the altitude (for example, at an altitude of 600 km) of the relay station 150 providing the serving cell of the UE 200 and the altitude (for example, at an altitude of 1200 km) of another relay station 150. Here, the information related to another relay station 150 may be notified from the gNB 100 to the UE 200.

Effect: The maximum value of time duration required by the UE 200 can be configured (it is possible to avoid unnecessary scheduling).

Option 3 (set of values): Configure multiple duration sets, each consisting of T_max for each parameter, and report one duration set of the multiple duration sets. For example, report one index (for example, Series #5) from the index (Series #0 to Series #9) of each duration set in the following list. Here, A to J_max_600 to 2000 km in the list refers to the T_max corresponding to the case where the altitude of the relay station 150 is 600 to 2000 km in the duration sets (Series #0 to Series #9).

Series #0: {A_max_600 km, A_max_1200 km, ... A_max_2000 km}
Series #1: {B_max_600 km, B_max_1200 km, ... B_max_2000 km} ...

Series #9: {J_max_600 km, J_max_1200 km, ... J_max_2000 km}

Example 1: The duration set consisting of T_max for each parameter described above is defined in the specification.

Example 2: The duration set consisting of T_max for each parameter described above is configured via an SIB such as an NTN-specific SIB.

Effect: The maximum value of time duration required by the UE 200 can be configured (it is possible to avoid unnecessary scheduling). In addition, one index is reported instead of reporting multiple T_max, thereby reducing overhead.

(3.2.2) Operation example 2

The operation example 2 is the reporting timing of T_max applied to the operation example 1.

Example 1: Any time is allowed. That is, the UE 200 may determine the reporting timing, or, the report is performed based on an instruction from the gNB 100 and the UE 200 may assume that the instruction can be received (at least during the RRC connection).

Example 2: When reporting the UE capability.

Example 3: At the time of first access procedure (for example, in PRACH, Msg3 PUSCH, Msg4 HARQ-ACK) Example 4: At the time of handover procedure (for example, when performing handover from the cell formed by the relay station 150 at an altitude of 600 km to the cell formed by the relay station 150 at an altitude of 1200 km)

(4) Other embodiments

Although the details of the present invention have been described along with the embodiment as above, it is apparent to those skilled in the art that the present invention is not limited to the above descriptions, and various modifications and improvements thereof are possible.

In the above disclosure, the relay station 150/UE 200/gNB 100 may be interpreted as meaning at least one of the relay station 150, the UE 200, and the gNB 100. Further, the above parameter may be a parameter related to a serving cell, or may be a parameter related to a neighbor cell.

In the above disclosure, "T_max corresponding to a parameter" may be interpreted as meaning T_max corresponding to a propagation distance that is determined based on a parameter, or T_max corresponding to the amount of change in the propagation distance. Similarly to "correspondence" in the above disclosure, "determination" here may be interpreted as calculating a propagation distance or the amount of change in the propagation distance, or it may be interpreted as selecting a propagation distance listed in the table acquired from the gNB 100 in advance or the amount of change in the propagation distance. Further, it may be interpreted as combining these. For example, it may be interpreted as selecting a propagation distance or the amount of change in the propagation distance that is closest to the calculated value, from the propagation distance listed in the table or the amount of change in the propagation distance.

In the disclosure described above, the parameter related to the position or movement of the relay station 150/UE 200/gNB 100 is, for example, altitude, moving speed, type of satellite (for example, GEO, MEO, LEO, HAPS, ATG), and orbit information; however, it is not limited thereto. The parameter related to the position or movement of the relay station 150/UE 200/gNB 100 may be, for example, an elevation angle of the relay station 150 as viewed from the UE 200/gNB 100 (an angle between the straight line connecting the UE 200/gNB 100 and relay station 150 and the horizontal line, hereinafter, it will be referred to as an UE/gNB elevation angle), or the orbit information of the relay station 150 or an effective duration configured in a common TA parameter (the parameter for determining the common TA notified by the gNB 100). Here, the effective duration considered for reporting T_max may be a value indicated by the parameter indicating a conventional effective duration (for example, ntn-UlSyncValidityDuration), or a value indicated by another parameter defined separately from the parameter. Since it is assumed that the effective duration is configured longer as the UE/gNB elevation angle is larger (closer to 90 degrees) and is configured shorter as the UE/gNB elevation angle is smaller (closer to 0 degrees or 180 degrees), it can be said that the effective duration is a parameter related to the position or movement of the relay station 150 like the UE/gNB elevation angle.

In the disclosure described above, "report" may mean as reporting the capability information of the UE 200, or information transmission from the UE 200 to the gNB 100.

In the disclosure described above, when reporting the maximum value of time duration corresponding to the parameter related to the position or movement of the relay station 150/UE 200/gNB 100, the maximum value of time duration may be reported in consideration of the UE/gNB elevation angle or effective duration described above.

Thus, the UE 200 can report the maximum value of time duration corresponding to the parameter related to the position or movement of the relay station 150/UE 200/gNB 100 and corresponding to the UE/gNB elevation angle or effective duration. In this case, the parameter related to the position or movement of relay station 150/UE 200/gNB 100 may include the UE/gNB elevation angle or effective duration. Alternatively, the method of reporting the maximum value of time duration corresponding to the parameter related to the position or movement of the relay station 150/UE 200/gNB 100 described above may be applied in combination with the method of reporting the maximum value of time duration corresponding to the UE/gNB elevation angle or effective duration. For example, in the method of reporting the maximum value of time duration corresponding to the parameter related to the position or movement of the relay station 150/UE 200/gNB 100 described above, the value when the specific UE/gNB elevation angle is applied may be reported.

The operation examples described above may be combined and applied compositely as long as there is no contradiction.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIG. 5, FIG. 6) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but the functions are by no means limited to these. For example, a functional block (component) to implement a function of transmission may be referred to as a "transmitting section (transmitting unit)," a "transmitter". The method for implementing each component is not particularly limited as described above.

Furthermore, the above-described gNB 100 and UE 200 (the apparatus) may function as a computer that executes the processes of the radio communication method of the present disclosure. FIG. 9 is a diagram to show an example of a hardware structure of the apparatus. As shown in FIG. 9, the apparatus may each be formed as a computer apparatus that includes a processor 1001, a memory 1002, a storage 1003, a communication apparatus 1004, an input apparatus 1005, an output apparatus 1006, a bus 1007, and so on.

Note that in the following description, the word such as an apparatus can be read as a circuit, a device, a section, a unit, and so on. The hardware structure of the apparatus may be configured to include one or more of apparatuses shown in the drawings, or may be configured not to include part of apparatuses.

Each function block (FIG. 5, FIG. 6) of the apparatus is implemented by one of hardware elements or the combination of the hardware elements in the computer apparatus.

Each function of the apparatus is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The above-described various processes may be performed by a single processor 1001, or may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and so on. The memory 1002 may be referred to as a "register," a "cache," a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of a compact disc (Compact Disc ROM (CD-ROM) and so on), a hard disk drive, a flexible disk, a magneto-optical disk (for example, a compact disc, a digital versatile disc, a Blu-ray (registered trademark) disk), a smart card, a flash memory device (for example, a card, a stick, and a key drive), a floppy (registered trademark) disk, a magnetic stripe, and so on. The storage 1003 may be referred to as "auxiliary storage apparatus." The above recording medium may be a database including at least one of the memory 1002 and the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that performs output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, pieces of apparatus, including the processor 1001, the memory 1002, and others, are connected by a bus 1007 for communicating information. The bus 1007 may be formed with a single bus, or may be formed with buses that vary between pieces of apparatus.

Also, the apparatus may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, RRC signaling, Medium Access Control (MAC) signaling), broadcast information (master information block (MIB), system information block (SIB)), and other signals or combinations of these. Also, RRC signaling may be referred to as an "RRC message, " and can be, for example, an RRC connection setup message, an RRC connection reconfiguration message, and so on.

The aspects/embodiments illustrated in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), New radio access (NX), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

Specific operations which have been described in the present disclosure to be performed by a base station may, in some cases, be performed by an upper node thereof. In a network including one or a plurality of network nodes with the base station, it is clear that various operations that are performed to communicate with a terminal can be performed by the base station and other network nodes (for example, Mobility Management Entities (MMEs), Serving-Gateways (S-GWs), and so on may be possible, but these are not limiting) other than the base station, or combinations of these. According to the above, a case is described in which there is a single network node other than the base station. However, a combination of multiple other network nodes may be considered (e.g., MME and S-GW).

The information or signals may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A determination may be realized by a value (0 or 1) represented by one bit, by a boolean value (true or false), or by comparison of numerical values (e.g., comparison with a predetermined value).

Each aspect/embodiment described in the present disclosure may be used independently, may be used in combination, or may be used by switching according to operations. Further, notification of predetermined information (e.g.,

notification of "X") is not limited to an explicit notification, and may be performed by an implicit notification (e.g., by not performing notification of the predetermined information).

Software should be broadly interpreted to mean, regardless of whether referred to as software, firmware, middleware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) and wireless technologies (infrared, microwave, etc.), at least one of these wired line technologies or wireless technologies is included within the definition of the transmission medium.

Information, a signal, or the like, described in the present disclosure may be represented by using any one of various different technologies. For example, data, an instruction, a command, information, a signal, a bit, a symbol, a chip, or the like, referred to throughout the above description, may be represented by a voltage, an electric current, electromagnetic waves, magnetic fields, a magnetic particle, optical fields, a photon, or a combination thereof.

It should be noted that a term described in the present disclosure and/or a term required for understanding of the present disclosure may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," and so on can be used interchangeably. A base station may be referred to as the terms such as a "macro cell," a "small cell," a "femto cell," a "pico cell," and so on.

A base station can accommodate one or a plurality of (for example, three) cells (which may be referred to as sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases by the skilled person in the art.

At least one of a base station and a mobile station may be referred to as a "transmitting apparatus," a "receiving apparatus," a "communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, a base station in the present disclosure may be interpreted as a mobile station (user terminal, hereinafter the same). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, the mobile station may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, a mobile station in the present disclosure may be interpreted as a base station. In this case, the base station may have the functions of the mobile station described above.

A radio frame may be constituted of one or a plurality of frames in the time domain. Each of one or a plurality of frames may be referred to as a "subframe" in the time domain.

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of the number of symbols less than a slot. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe, " a "long subframe, " a "slot," or the like. A TTI that is shorter than a normal TTI may be referred to as a "shortened TTI, " a "short TTI, " a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (REs). For example, one RE may be a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of one or more wires, cables, and printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot", depending on which standard is applied.

The phrase "based on" as used in the present disclosure does not mean "based only on", unless otherwise specified. In other words, the phrase "based on" means both "based only on" and "based at least on".

"Means" included in the configuration of each of the above apparatuses may be replaced by "parts", "circuits", "devices", etc.

Reference to elements with designations such as "first," "second," and so on used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present disclosure is not intended to be an "exclusive or".

In the present disclosure, in the case where an article is added by translation, for example "a", "an", and "the", the disclosure may include that the noun following these articles is plural.

As used in the present disclosure, the term "determining" may encompasses a wide variety of actions. For example, "determining" may be regarded as determining to have performed judging, calculating, computing, processing, deriving, investigating, looking up (looking up, search, inquiry) (e.g., looking up in a table, a database or another data structure), ascertaining and the like. Also, "determining" may be regarded as determining to have performed receiving (e.g., receiving information), transmitting (e.g., transmitting information), inputting, outputting, accessing (e.g., accessing data in a memory) and the like. Also, "determining" may be regarded as determining to have performed resolving, selecting, choosing, establishing, comparing and the like. That is, "determining" may be regarded as determining to have performed some action. Moreover, "determining" may be read as "assuming", "expecting", "considering", and the like.

In this disclosure, the term "A and B are different" may mean "A and B are different from each other." It should be noted that the term "A and B are different" may mean "A and B are different from C." Terms such as "separated" or "combined" may be interpreted in the same way as the "different".

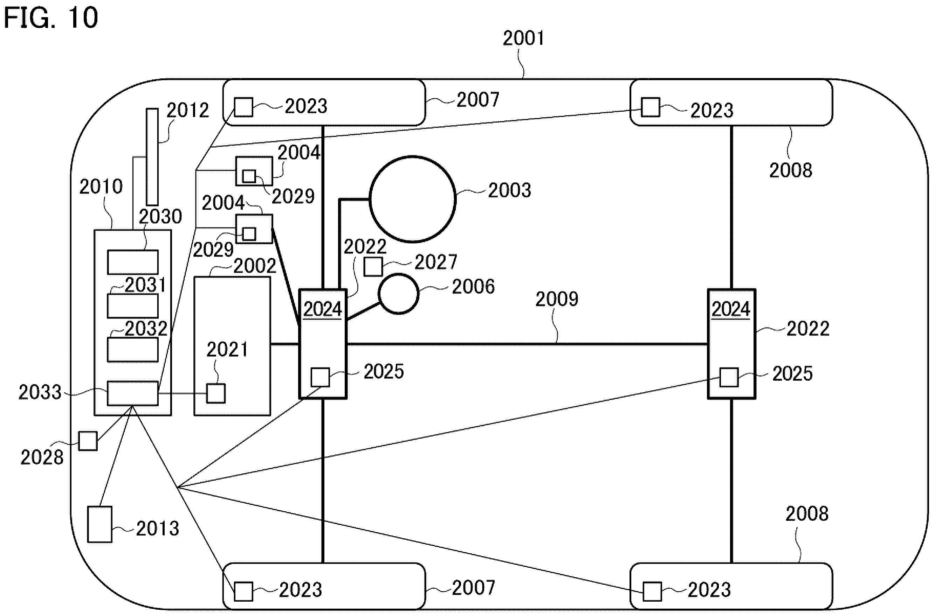

Fig. 10 shows an example of a configuration of a vehicle 2001. As shown in Fig. 10, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021-2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-29 provided in the vehicle. The electronic control unit 2010 may be referred to as an ECU (Electronic Control Unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal from a current sensor, which is input to the electronic control unit 2010, to external devices through radio communication. Also, the communication module 2013 transmits to external devices through radio communication, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like, which are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

As described above, the present disclosure has been described in detail. It is apparent to a person skilled in the art that the present disclosure is not limited to one or more embodiments described in the present disclosure. The present disclosure can be implemented as modifications and variations without departing from the subject matter and the scope of the present disclosure defined by the descriptions of claims. Therefore, the descriptions of the present disclosure are for illustrative purposes only, and are not intended to be any limitations to the present disclosure.

(Supplementary notes)

The above disclosure may be expressed as follows.

A first feature is a terminal including: a control unit that acquires a parameter related to at least one of a relay station that relays a radio communication between the terminal and a base station, the terminal, and the base station, the parameter related to position or movement; and a transmission unit that reports a duration corresponding to the parameter during which an update of a transmission timing of the terminal in an uplink to cause phase discontinuity is not performed.

A second feature is the terminal that in the first feature, the parameter includes at least one of altitude, moving speed, type of satellite, and orbit information.

A third feature is the terminal that in the first feature or second feature, the control unit acquires a single value as the parameter, and the transmission unit reports the duration corresponding to the single value.

A fourth feature is the terminal that in the first feature or second feature, the control unit acquires multiple values as the parameter, and the transmission unit reports a plurality of the durations corresponding to each of the multiple values.

A fifth feature is the terminal that in the fourth feature, the control unit configures a plurality of duration sets, each consisting of a plurality of the durations, and the transmission unit reports one duration set of the multiple duration sets.

A sixth feature is the terminal that in any one of the first feature to fifth feature, the transmission unit reports the duration together with capability information of the terminal.

REFERENCE SIGNS LIST

    10 radio communication system
    20 NG-RAN
    100 gNB
    110 radio signal transmission and reception unit
    120 control unit
    150 relay station
    200 UE
    210 radio signal transmission and reception unit
    220 amplifier unit
    230 modulation and demodulation unit
    240 control signal and reference signal processing unit
    250 encoding/decoding unit
    260 data transmission and reception unit
    270 control unit
    1001 processor
    1002 memory
    1003 storage
    1004 communication apparatus
    1005 input apparatus
    1006 output apparatus
    1007 bus
    2001 vehicle
    2002 drive unit
    2003 steering unit
    2004 accelerator pedal
    2005 brake pedal
    2006 shift lever
    2007 left and right front wheels
    2008 left and right rear wheels
    2009 axle
    2010 electronic control unit
    2012 information service unit
    2013 communication module
    2021 current sensor
    2022 rotational speed sensor
    2023 pneumatic sensor
    2024 vehicle speed sensor
    2025 acceleration sensor
    2026 brake pedal sensor
    2027 shift lever sensor
    2028 object detection sensor
    2029 accelerator pedal sensor
    2030 driving support system unit

2031 microprocessor
2032 memory (ROM, RAM)
2033 communication port

**Claims**

1. A terminal comprising:

   a control unit that acquires a parameter related to at least one of a relay station that relays a radio communication between the terminal and a base station, the terminal, and the base station, the parameter related to position or movement; and
   a transmission unit that reports a duration corresponding to the parameter during which an update of a transmission timing of the terminal in an uplink to cause phase discontinuity is not performed.

2. The terminal according to claim 1, wherein
   the parameter includes at least one of altitude, moving speed, type of satellite, and orbit information.

3. The terminal according to claim 1, wherein

   the control unit acquires a single value as the parameter, and
   the transmission unit reports the duration corresponding to the single value.

4. The terminal according to claim 1, wherein

   the control unit acquires multiple values as the parameter, and
   the transmission unit reports a plurality of the durations corresponding to each of the multiple values.

5. The terminal according to claim 4, wherein

   the control unit configures a plurality of duration sets, each consisting of a plurality of the durations, and
   the transmission unit reports one duration set of a plurality of the duration sets.

6. The terminal according to claim 1, wherein
   the transmission unit reports the duration together with capability information of the terminal.

# FIG. 1

EP 4 668 994 A1

# FIG. 2

FR1
{15,30,60} kHz SCS
5～100 MHz BW

FR2-1
{60,120,(240)} kHz SCS
50～400 MHz BW

FR2-2

0.41
GHz

1GHz

7.125
GHz

10GHz

24.25
GHz

52.6
GHz

71GHz

100GHz

f

# FIG. 3

Radio Frame (10ms)

| #0 | #1 | #2 | #3 | #4 | #5 | #6 | #7 | #8 | #9 |

Sub frame (1ms)

SCS

Slot (14-symbol)

15kHz

| #0 | #1 | #2 | #3 | #4 | #5 | #6 | #7 | #8 | #9 | #10 | #11 | #12 | #13 |

Slot (14-symbol)

30kHz

Slot (14-symbol)

60kHz

Slot (14-symbol)

120kHz · · ·

Slot (14-symbol)

240kHz · · ·

480kHz · · ·

960kHz · · ·

EP 4 668 994 A1

# FIG. 4

## FIG. 5

# FIG. 6

# FIG. 7

FIG. 8

FIG. 9

FIG. 10

EP 4 668 994 A1

## INTERNATIONAL SEARCH REPORT

| International application No. |
|---|
| **PCT/JP2023/004827** |

| A. | CLASSIFICATION OF SUBJECT MATTER |
|---|---|

*H04W 72/51*(2023.01)i; *H04W 24/10*(2009.01)i; *H04W 84/06*(2009.01)i
FI:    H04W72/51; H04W24/10; H04W84/06

According to International Patent Classification (IPC) or to both national classification and IPC

| B. | FIELDS SEARCHED |
|---|---|

Minimum documentation searched (classification system followed by classification symbols)

H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | MEDIATEK INC., Coverage enhancement for NR NTN [online], 3GPP TSG RAN WG1 #111 R1-2211093, 18 November 2022, Internet <URL: https://www.3gpp.org/ftp/tsg_ran/ WG1_RL1/TSGR1_111/Docs/R1-2211093.zip> <br> section 3 | 1-6 |
| A | VIVO, Discussions on coverage enhancements for NR NTN [online], 3GPP TSG RAN WG1 #111 R1-2211026, 18 November 2022, Internet <URL: https://www.3gpp.org/ftp/tsg_ran/ WG1_RL1/TSGR1_111/Docs/R1-2211026.zip> <br> section 2.2 | 1-6 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 August 2023** | **29 August 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Technical Specification Group Radio Access Network; NR; Physical layer procedures for control (Release 17), 3GPP. *3GPP TS 38.213 V17.3.0, 3rd Generation Partnership Project*, September 2022

- Technical Specification Group Radio Access Network; NR; Physical layer procedures for control (Release 17), 3GPP. *3GPP TS 38.214 V17.3.0, 3rd Generation Partnership Project*, September 2022